# EUROPÄISCHE PATENTSCHRIFT

(11) **EP 2 359 354 B1**
(45) Veröffentlichungstag und Bekanntmachung des Hinweises auf die Patenterteilung: **24.02.2021**
(21) Anmeldenummer: 09774824.8
(22) Anmeldetag: 20.11.2009
(51) Int. Cl.: G08C 17/02, G05B 19/042

(54) **NETZWERK MIT STEUERGERÄT UND SENSOR/AKTOR MIT ZWEI REDUNDANTEN ÜBERTRAGUNGSSTRECKEN**
NETWORK COMPRISING A CONTROL UNIT AND A SENSOR/ACTUATOR WITH TWO REDUNDANT TRANSMISSION LINES
RÉSEAU PRÉSENTANT UN APPAREIL DE COMMANDE ET UN CAPTEUR/ACTIONNEUR À DEUX VOIES DE TRANSMISSION REDONDANTES

(30) Priorität: 22.11.2008 DE 102008058593
(43) Veröffentlichungstag der Anmeldung: 24.08.2011
(73) Patentinhaber: WIKA Mobile Control GmbH & Co. KG, 76275 Ettlingen (DE)
(72) Erfinder: PETRAK, Leo, 76359 Marxzell (DE); STEINMETZ, Markus, 76133 Karlsruhe (DE); MONGER, Andreas, 81547 München (DE); CHENG, Weiwei, 76135 Karlsruhe (DE)
(74) Vertreter: Wachinger, Julian Friedrich
(86) Internationale Anmeldenummer: PCT/EP2009/008285
(87) Internationale Veröffentlichungsnummer: WO 2010/057655

(56) Entgegenhaltungen:
- WO-A1-2007/047128
- GB-A- 2 311 155

## Beschreibung

Die Erfindung betrifft eine Vorrichtung, aufweisend ein Steuergerät mit zumindest einem an dem Steuergerät angeschlossenen Sensor oder zumindest einem Aktor, ausgebildet zur Übertragung von Daten zwischen dem Steuergerät und dem Sensor oder dem Aktor, gemäß den Merkmalen des Oberbegriffes des Patentanspruches 1.

Die klassische Anbindung von Sensoren/Aktoren an ein Steuergerät (Sicherheitssystem, DIN EN ISO 13849-1) ist kabelgebunden. Das bedeutet, dass aufgrund der räumlichen Trennung von Steuergerät und Sensor/Aktor eine Kabelverbindung zwischengeschaltet ist, mit der die Sensorsignale an das Steuergerät zur weiteren Verarbeitung weitergeleitet werden oder von dem Steuergerät Steuersignale an den Aktor abgegeben werden, um bestimmte Funktionen zu steuern bzw. zu regeln. Ein Beispiel für ein solches System sind Arbeitsfahrzeuge wie Krane, bei denen das Steuergerät im Fahrerhaus oder im Schaltschrank angebracht ist, wohingegen Sensoren, die beispielsweise die Auslenkung (Winkelanstellung) eines Auslegers oder seine Länge erfassen, weit von dem Steuergerät entfernt sind. Da das Arbeiten eines solchen Kranes unter sicherheitskritischen Bedingungen erfolgt und gefährdende Situationen vermieden werden müssen, ist es unbedingt erforderlich, dass immer eine Verbindung zwischen Steuergerät und Sensor/Aktor zur Übertragung der Signale besteht, die zur Erzielung dieser Anforderungen kabelgebunden ist. Ein solches kabelgebundenes System funktioniert zwar an und für sich zuverlässig, hat jedoch den Nachteil, dass die Verkabelung aufwendig und kostenintensiv ist.

Anstelle eines kabelgebundenen Systems ist auch schon an ein kabelloses System gedacht worden, bei dem die Signale zwischen Steuergerät und Sensor/Aktor kabellos, z.B. über Funk, übertragen werden. Eine drahtlose Übertragung mittels Lichtsignalen scheidet in der Regel aus, da immer ein Sichtkontakt zwischen Steuergerät und Sensor/Aktor bestehen muss, der insbesondere bei Baufahrzeugen häufig nicht gegeben ist. Allerdings ist die Datenübertragung mittels Lichtsignalen, ggf. mit Nachführung, in diesem Fall nicht ausgeschlossen.

Die Datenübertragung mittels Funk erfordert zur Überwachung von sicherheitsrelevanten Funktionen allerdings eine weitergehende Absicherung der Übertragung der Signale (Kommunikation), da das Übertragungsmedium Luft wesentlich störanfälliger ist als ein klassisches Kabelmedium. Eine Fehlerwahrscheilichkeit bei kabelgebundener Übertragung liegt bei ca. 10⁻¹¹, bei Funk ca. bei 10⁻⁴.
Eine kabellose Kommunikationsverbindung zwischen Steuergerät und Sensor/Aktor ist gegenüber Umwelteinflüssen dahingehend anfällig, dass Störer im verwendeten Frequenzbereich nicht ausgeschaltet werden können. Z.B. strahlt eine Mikrowelle trotz Abschirmung im ISM-Frequenzband 2,4 GHz Störsignale ab mit einer Leckstrahlung von wenigen Milliwatt pro cm². Unvorhersehbare störende Einflüsse können z.B. durch elektrische Generatoren verursacht werden und dadurch ein Verbindungsabbruch bzw. zeitweiliger Ausfall der Kommunikationsverbindung von in der Nähe befindlichen Radiogeräten oder anderen Transceivern verursachen. Das Frequenzband bei der Datenübertragung zwischen Steuergerät und Sensor/Aktor wird daher teilweise bezüglich des Frequenzbereiches oder auch zeitlich geblockt. Durch das Verlegen des Standortes des sicherheitskritischen Systems (z.B. durch Verfahren des Kranes) wird der Empfangs- bzw. Sendebereich eines mit Funk kommunizierenden Gerätes verändert. Bei dynamischen Systemen, siehe einen Kran als Beispiel, verändern Sensoren, die an der Auslegerspitze angebracht sind, ihren Ort relativ zur Empfangsstation beim Teleskopieren des Auslegers und/oder absenken/anheben. Die imitierte Signalstärke verhält sich nicht diskret, sondern nimmt fließend zu oder ab, resultiert jedoch zum Einen vom Standort und zum Anderen entsprechend der verwendeten Antennenform, z.B. einer Richtantenne. Die Stärke der Funkwellen nimmt proportional zum Quadrat der Entfernung ab. Der Standort und seine Umgebungsbedingungen (generell starke Veränderung der Ausbreitungsgeschwindigkeit bezüglich des Mediums (Wasser, Luft, Staub), auch wie z.B. verschmutzte Luft oder hohe Luftfeuchtigkeit) haben zudem ebenfalls Einfluss auf die Datenübertragung. Ist die Störquelle nur temporär wirksam, so kann bei einer einzigen Übertragungsstrecke zwischen dem Steuergerät und dem Sensor/Aktor durch eine erneute Übertragung (zeitlich versetzt) die Kommunikationsverbindung wieder aufgebaut werden. Der zeitgleiche Zugriff auf das geteilte Medium verhindert den Empfang von ungestörten und folglich eindeutigen Datenübertragungssignalen. Die Möglichkeit einer zeitlichen Verschiebung eines Datenpaketes (zeitlicher Versatz der Übertragung) wird zwar schon in einer Vielzahl von Kommunikations- bzw. Routing-Protokollen angewandt, jedoch nicht in Kombination mit einer "örtlichen Umgehung". Wurde der Empfang einer dedizierten Nachricht nicht quittiert, so wird diese erneut übertragen. Dieses wird nach dem Ablauf eines definierten oder zufälligen Timers durchgeführt, d.h. es erfolgt eine Wiederholung der Übertragung des schon gesendeten Datenpaketes. Ist eine örtliche oder technologische Umgehung der Störquelle nicht möglich, so bleibt der zeitliche Versatz, um ein Datenpaket auszuliefern. Eine örtliche Umgehung der Störquelle kann durch Routing-Mechanismen gewährleistet werden, z.B. kann von einem Transceiver-Modul mit geeigneter Software ein Mesh-Network aufgebaut werden, das alternative Kommunikations-Routing-Wege ermöglicht.

Die vorstehend beschriebenen Maßnahmen sind allerdings äußerst aufwendig und gerade wegen des zeitlichen Versatzes kommt es zu einer verzögerten Übertragung von Signalen zwischen Steuergerät und Sensor/Aktor (oder umgekehrt), wobei dieser zeitliche Versatz zu verzögerten Aktionen bzw. Reaktionen führt, die bei sicherheitskritischen Systemen zu lange dauern und nicht nur unerwünscht sind, sondern unbedingt vermieden werden müssen. Gegebenenfalls muss der "Sichere Zustand" (engl. Fail Safe) [Quelle: http://de.wikipedia.org/wiki/Fail-Safe] hergestellt werden. Der "Sichere Zustand" beschreibt eine Konfiguration, von der aus das System wieder in Betrieb gehen kann und der keinerlei Gefahrensituationen in sich birgt. Das Herstellen des "Sicheren Zustands" unterbricht den Arbeitsablauf. Die Unterbrechung des Arbeitsablaufes gilt es zu minimieren.

Dokument WO 2007/047128 A1 offenbart ein drahtloses medizinisches System, umfassend eine drahtlose Vorrichtung und einen drahtlosen Controller, die über einen primären und mehrere Backup-Pfade bzw. Datenkanäle eines drahtlosen Kommunikationsnetzwerks kommunizieren.

Der Erfindung liegt daher die Aufgabe zugrunde, eine Datenübertragung zwischen einem Steuergerät und einem daran angeschlossenen Sensor/Aktor mit einer möglichst hohen Wahrscheinlichkeit der Auslieferung von Datenpaketen über die Übertragungsstrecke zu realisieren, um den Betrieb eines sicherheitsrelevanten Systems zu verlängern, wobei zu verlängern in dem Sinne zu verstehen ist, dass keine Gefahren reduzierenden Maßnahmen aufgrund von fehlenden Statusinformationen durchgeführt werden müssen. Das bedeutet, dass die Datenübertragung derart verbessert werden soll, dass sicherheitskritische Situationen, aufgrund von unterbrochenden Kommunikationskanälen, bei einem Gesamtsystem vermieden werden.

Diese Aufgabe ist durch die Merkmale des Patentanspruches 1 gelöst.

Erfindungsgemäß ist vorgesehen, dass das Steuergerät über zumindest zwei, vorzugsweise genau zwei voneinander getrennte drahtlose Übertragungsstrecken mit dem zumindest einen Sensor und/oder dem zumindest einen Aktor verbunden ist, wobei die Übertragung von Daten zwischen dem Steuergerät und dem Sensor/Aktor über die beiden Übertragungsstrecken mit unterschiedlichen Übertragungsparametern erfolgt. Dies hat den Vorteil, dass für den Fall, dass eine drahtlose Übertragungsstrecke zwischen Steuergerät und Sensor/Aktor gestört sein sollte, die zweite drahtlose Übertragungsstrecke für den Datenaustausch zur Verfügung steht, wobei die Übertragung über diese störungsfreie Übertragungsstrecke mit einem anderen Übertragungsparameter erfolgt als über die gestörte Übertragungsstrecke. Das bedeutet, dass mit hoher Wahrscheinlichkeit bei einer gestörten Übertragungsstrecke eine weitere Übertragungsstrecke zur Verfügung steht, die für die Datenübertragung genutzt werden kann. Da dies im Regelfall zeitgleich erfolgt, ist die bei sicherheitskritischen Systemen erforderliche kurze Datenübertragungszeit sowie die entsprechende Aktions- bzw. Reaktionszeit gewährleistet, so dass sicherheitskritische Situationen vermieden werden. Das heisst, dadurch wird der "Sichere Zustand", wie oben definiert, vermieden, so dass der "Sichere Zustand" nicht aufgrund von unterbrochenem Kommunikationskanal eingenommen werden muss.

Als unterschiedliche Übertragungsparameter (auch unterschiedliche Übertragungstechniken fallen darunter) kommen bei drahtlosen Funk-Übertragungsstrecken z.B. unterschiedliche Funkfrequenzen in Betracht, wobei allerdings auch bei Verwendung einer einzigen Funkfrequenz für die Übertragung über beide Übertragungsstrecken unterschiedliche Modulationsschemata bzw. unterschiedliche Kommunikationsprotokolle als Übertragungsparameter in Betracht kommen. Diese Aufzählung ist nur beispielhaft und nicht abschließend, so dass auch alle anderen Übertragungsparameter bei der Daten- bzw. Signalübertragung über Funk zwischen dem Steuergerät und dem Sensor/Aktor in Betracht kommen können.

Erfindungsgegenstand ist also mit anderen Worten der Aufbau, ein koordinierender Controller, an dem Steuereinheiten und/oder Sensoren/Aktoren angeschlossen werden können, und die Möglichkeit, an diesen Controller zwei oder mehrere Radio-Module anzuschließen und diese Radio-Module entsprechend den Umwelteinflüssen(Störungen) für die Kommunikation zu benutzen.

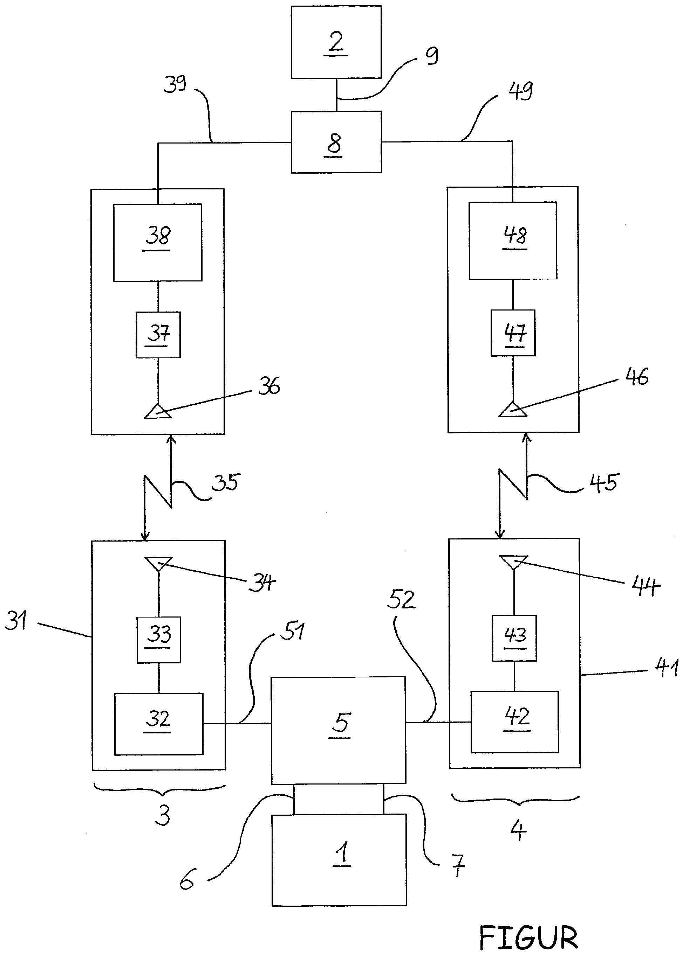

Weitere vorteilhafte Ausgestaltungen der Erfindung sind in den Unteransprüchen angegeben, wobei deren Merkmale im Zusammenhang mit der folgenden Beschreibung anhand der einzigen Figur näher erläutert werden.

Die einzige Figur zeigt, soweit im Einzelnen dargestellt, in Form eines Gesamtsystems eine vorzugsweise modular aufgebaute (das heisst aus einzelnen Modulen bestehende) Vorrichtung zum Steuern bzw. Regeln von sicherheitsrelevanten Systemen. Bei einem solchen System handelt es sich beispielsweise um einen Kran (allgemein um ein Arbeitsfahrzeug oder eine Arbeitsanlage), bei dem die Vorrichtung ein Steuergerät 1 aufweist, wobei zumindest ein Parameter des Gesamtsystems von einem Sensor 2 erfasst wird. Bei diesem Ausführungsbeispiel steht der Sensor 2 stellvertretend für nur einen oder mehrere Sensoren und ggf. auch einen oder mehrere Aktoren, mit denen Parameter des Gesamtsystems erfasst und Funktionen gesteuert werden. Aktoren sind beispielsweise Stellmotoren, Hydraulikzylinder oder dergleichen.

Erfindungsgemäß ist das Steuergerät 1 mit dem Sensor 2 bei diesem Ausführungsbeispiel über genau zwei voneinander getrennte drahtlose Übertragungsstrecken 3, 4 verbunden. Das Steuergerät 1 übernimmt die Verarbeitung der Signale, die von dem Sensor 2 abgegeben worden sind, so z.B. ihre Auswertung für Steuerungen und Regelungen oder bildliche oder akustische Darstellungen.

Zur Abwicklung der Datenübertragung über die beiden Übertragungsstrecken 3, 4 ist das Steuergerät 1 mit einer Verbindungseinheit 5 über störungssichere drahtgebundene Verbindungen 6, 7 verbunden, wobei die Verbindungseinheit 5 die Datenübertragung über die Übertragungsstrecken 3, 4 regelt.

Die Verbindungseinheit 5 steuert in der jeweiligen Übertragungsstrecke 3, 4 eine Übertragungseinheit 31, 41, die ihrerseits eine Steuereinheit 32, 42, einen daran angeschlossenen Transceiver 33, 43 sowie daran angeschlossenen Antennen 34, 44 aufweisen. Die Antennen 34, 44 sind, wenn nur Signale eines Sensors 2 an das Steuergerät 1 übertragen werden sollen, als Empfangsantennen ausgebildet. Sollen jedoch von den Antennen 34, 44 auch Signale in Richtung eines Aktors abgestrahlt werden (Steuersignale), sind diese Antennen als Sendeantennen ausgebildet.

Alternativ dazu können sie auch in Kombination als Sende-/Empfangsantennen ausgebildet sein und senden und empfangen.

Bis zu den Antennen 34, 44 sind die Übertragungsstrecken von dem Steuergerät 1 bis zu den Antennen 34, 44 drahtgebunden und damit störeinstrahlungssicher. Die von den Antennen 34, 44 abgestrahlten oder empfangenen Signale werden über Funkstrecken 35, 45 zu nachgeschalteten Einheiten übertragen, die analog zu den Übertragungseinheiten 31, 41 aufgebaut sind. So umfassen diese nachgeschalteten Einheiten ebenfalls Antennen 36, 46, die verbunden sind mit einem Transceiver 37, 47 und einer nachgeschalteten Steuereinheit 38, 48, wobei der Sensor 2 über eine drahtgebundene Verbindung 39, 49 mit den Steuereinheiten 38, 48 verbunden ist. Das bedeutet, dass auch derjenige Teil der Signalübertragung von den Antennen 36, 46 bis zu dem Sensor 2 (und/oder dem Aktor) störstrahlungssicher ausgebildet ist.

Die Elemente zur Datenübertragung und Datenverarbeitung von dem Steuergerät bis hin zu den Antennen 34, 44 (oder zurück) sind alle in einem einzigen Gerät untergebracht oder modulartig aufgebaut, wie dies beispielsweise in der Figur dargestellt ist. Der modulartige Aufbau hat den Vorteil, dass ein Baukastensystem zur Verfügung steht, wobei die einzelnen Module (Steuergerät 1, Verbindungseinheit 5 und Übertragungseinheiten 31, 41) nach Anforderungen des Anwenders des sicherheitsrelevanten Systems zusammengestellt und über die Verbindungen 51, 52, 6, 7 elektrisch miteinander verbunden werden können. Gleiches gilt auch für die Elemente im Bereich des Sensors 2, wobei die dortigen Übertragungseinheiten ebenfalls Bestandteil eines Gesamtsensors (bzw. GesamtAktors) sein können oder es sich um einzelne Module handelt, die mit dem jeweiligen Sensor, der dem Einsatzzweck angepasst werden kann (genauso wie der Aktor) zusammengestellt werden können.

Die Verbindungseinheit 5 übernimmt die Koordinierung der Datenübertragung (Sensorsignale bzw. Steuersignale für den Aktor) und gibt seine Koordinierungssignale über die drahtgebundenen Verbindungen 51, 52 an die jeweilige Übertragungseinheit 31, 41 ab. In den Übertragungseinheiten 31, 41 findet die Konfiguration (eigentliche Entscheidung) statt, mit welchen Übertragungsparametern die gewünschten Signale über die Funkstrecken 35, 45 übertragen werden, wozu die Steuereinheiten 32, 42 vorhanden und ausgebildet sind. Die Transceiver 33, 43 haben die Aufgabe, die zu übermittelnden Daten hochfrequenzmäßig aufzubereiten und über die Antennen 34, 44 abzustrahlen. Die Transceiver 33, 43 sind bei diesem Ausführungsbeispiel derart ausgebildet, dass sie über die Antennen 33, 43 sowohl Signale abstrahlen können (Steuersignale für den Aktor) als auch empfangen können (Sensorsignale des Sensors). Ist nur zumindest ein Sensor Bestandteil des Gesamtsystems, so reicht es aus, dass in der Übertragungseinheit auf Sensorseite Transmitter 37, 47 und Sendeantennen 36, 46 vorhanden sind, wobei die Antennen 34, 44 als Empfangsantennen und 33, 43 als Receiver ausgebildet sind. Umgekehrt sind 33, 43 als Transmitter und die Antennen 34, 44 als Sendeantennen ausgebildet, genauso wie die Antennen 36, 46 Empfangsantennen und 37, 47 Receiver sind, wenn das Gesamtsystem nur zumindest einen Aktor aufweist.

Die Verbindungen 6, 7 sowie 51, 52 und 39, 49 sind in vorteilhafter Weise drahtgebunden, so dass die an den genannten Verbindungen angeschlossenen Elemente über Kabel und zugehörige Steckverbinder zwecks Datenübertragung miteinander elektrisch verbunden werden. Je nach räumlicher Nähe ist es auch denkbar, dass diese genannten Verbindungen oder ein Teil der genannten Verbindungen nur als Steckverbindung (Stecker und Buchse) ausgebildet sind, was es ermöglicht, die beteiligten Elemente direkt zusammenzustecken, um eine Art Baukastensystem zu realisieren.

Der Sensor 2 ist mit einer Verbindungseinheit 8 über eine drahtgebundene Verbindung 9 verbunden, wobei die Verbindungseinheit 8 den Datenfluss über die beiden Übertragungsstrecken 3, 4 koordniert. Das bedeutet, dass die Verbindungseinheit 8 nicht nur eine rein elektrische Verbindungsfunktion hat, sondern den gesamten Datenfluss der von dem Sensor 2 aufgenommenen Daten über die Übertragungsstrecken 3, 4 hin zu der Verbindungseinheit 5 und dem Steuergerät 1 koordniert, wobei das Steuergerät 1 die empfangenen Daten auswerten und zur weiteren Verarbeitung bereitstellen kann. In vorteilhafter Weise sind die beiden Verbindungseinheiten 5 und 8 hinsichtlich ihrer Funktionsweise, gegebenenfalls auch hinsichtlich ihres Aufbaus, identisch. Ergänzend oder alternativ kann an der Verbindungseinheit 8 auch mehr als ein Sensor 2 und/oder ein Aktor oder mehrere Aktoren angeschlossen sein.

### Bezugszeichenliste

- 1.: Steuergerät
- 2.: Sensor
- 3.: Übertragungsstrecke
- 31.: Übertragungseinheit
- 32.: Steuereinheit
- 33.: Transceiver
- 34.: Antenne
- 35.: Funkstrecke
- 36.: Antenne
- 37.: Transceiver
- 38.: Steuereinheit
- 39.: drahtgebundene Verbindung
- 4.: Übertragungsstrecke
- 41.: Übertragungseinheit
- 42.: Steuereinheit
- 43.: Transceiver
- 44.: Antenne
- 45.: Funkstrecke
- 46.: Antenne
- 47.: Transceiver
- 48.: Steuereinheit
- 49.: drahtgebundene Verbindung
- 5.: Verbindungseinheit
- 51.: drahtgebundene Verbindung
- 52.: drahtgebundene Verbindung
- 6.: drahtgebundene Verbindung
- 7.: drahtgebundene Verbindung
- 8.: Verbindungseinheit
- 9.: drahtgebundene Verbindung

## Patentansprüche

1. Vorrichtung, aufweisend ein Steuergerät (1) mit zumindest einem an dem Steuergerät (1) angeschlossenen Sensor (2) oder Aktor, ausgebildet zur Übertragung von Daten zwischen dem Steuergerät (1) und dem Sensor (2) oder dem Aktor, wobei das Steuergerät (1) über zumindest zwei voneinander getrennte drahtlose Übertragungsstrecken (3, 4) mit dem Sensor (2) oder dem Aktor verbunden ist, wobei die Übertragung von Daten zwischen dem Steuergerät (1) und dem Sensor (2) oder dem Aktor über die beiden Übertragungsstrecken (3, 4) mit unterschiedlichen Übertragungsparametern erfolgt, wobei das Steuergerät (1) eine Verbindungseinheit (5) aufweist oder über eine drahtgebundene Verbindung (6, 7) an einer Verbindungseinheit (5) angeschlossen ist, wobei die Verbindungseinheit (5) zur Koordinierung der Übertragung von Daten zwischen dem Steuergerät (1) und dem Sensor (2) oder dem Aktor über die beiden Übertragungsstrecken (3, 4) mit unterschiedlichen Übertragungsparametern ausgebildet ist und wobei weiterhin die Verbindungseinheit (5) über jeweils eine drahtgebundene Verbindung (51, 52) mit einer Übertragungseinheit (31, 41) verbunden ist, wobei die Übertragungseinheit (31, 41) zur Koordinierung der Übertragung von Daten zwischen dem Steuergerät (1) und dem Sensor (2) oder dem Aktor über die jeweilige der beiden Übertragungsstrecken (3, 4) mit unterschiedlichen Übertragungsparametern ausgebildet ist, wobei die Übertragungsparameter eine Funkfrequenz und/oder ein Modulationsschema und/oder ein Kommunikationsprotokoll für die zu übertragenden Daten sind,
**dadurch gekennzeichnet,**
**dass** die Übertragung der Daten zwischen dem Steuergerät (1) und dem Sensor (2) oder dem Aktor über die beiden Übertragungsstrecken (3, 4) zeitgleich erfolgt.

2. Vorrichtung nach Anspruch 1 , **dadurch gekennzeichnet, dass** die Übertragungsstrecken (3, 4) als Funkstrecken (35, 45) ausgebildet sind.

3. Vorrichtung nach einem der vorhergehenden Ansprüche, **dadurch gekennzeichnet, dass** dem Sensor (2) oder dem Aktor ebenfalls eine Übertragungseinheit zugeordnet ist, wobei die jeweilige Übertragungseinheit über eine drahtgebundene Verbindung (39, 49) mit dem Sensor (2) oder dem Aktor verbunden ist.

4. Vorrichtung nach Anspruch 3, **dadurch gekennzeichnet, dass** dem Sensor (2) oder dem Aktor ebenfalls eine Verbindungseinheit zugeordnet ist, wobei die Verbindungseinheit mit der jeweiligen Übertragungseinheit verbunden ist, wobei die Übertragungseinheit zur Koordinierung der Übertragung von Daten zwischen dem Sensor (2) oder dem Aktor und dem Steuergerät (1) über die jeweilige der beiden Übertragungsstrecken (3, 4) mit unterschiedlichen Übertragungsparametern ausgebildet ist.

5. Vorrichtung nach einem der vorhergehenden Ansprüche, **dadurch gekennzeichnet, dass** die die Funkfrequenzen und/oder die Kommunikationsprotokolle für die zu übertragenden Daten unterschiedlich sind.

6. Vorrichtung nach einem der vorhergehenden Ansprüche, **dadurch gekennzeichnet, dass** die Modulationsschemata für die zu übertragenden Daten unterschiedlich sind.

7. Vorrichtung nach einem der vorhergehenden Ansprüche, **dadurch gekennzeichnet, dass** die dem Steuergerät (1) zugeordneten Übertragungseinheiten (31 , 41) sowie die dem Sensor (2) oder dem Aktor zugeordneten Übertragungseinheiten jeweils einen Transceiver (33, 43; 37, 47) sowie aufeinander abgestimmte Antennen (34, 44; 36, 46) aufweisen.

8. Vorrichtung nach Anspruch 7, wobei die Transceiver (33, 43, 37, 47) dazu eingerichtet sind, die zu übermittelnden Daten hochfrequenzmäßig aufzubereiten und über die Antennen (34, 44) abzustrahlen.

9. Vorrichtung nach einem der vorhergehenden Ansprüche, **dadurch gekennzeichnet, dass** das Steuergerät (1), die Verbindungseinheit (5) und die Übertragungseinheiten (31, 41) modulartig aufgebaut sind.

10. Arbeitsfahrzeug mit einer Vorrichtung nach einem der vorhergehenden Ansprüche.

11. Arbeitsfahrzeug nach Anspruch 10, welches ein Kran ist.

## Claims

1. Device having a control unit (1) with at least one sensor (2) or actuator connected to the control unit (1), configured to transmit data between the control unit (1) and the sensor (2) or actuator, the control unit (1) being connected to the sensor (2) or actuator by means of at least two mutually separate wireless transmission links (3, 4), and data is transmitted between the control unit (1) and the sensor (2) or actuator via the two transmission links (3, 4) using different transmission parameters, and the control unit (1) has a connection unit (5) or is connected to a connection unit (5) by means of a wired connection (6, 7), the connection unit (5) being configured to coordinate the transmission of data between the control unit (1) and the sensor (2) or actuator via the two transmission links (3, 4) using different transmission parameters, and the connection unit (5) is also connected to a transmission unit (31, 41) respectively by means of a wired connection (51, 52), the transmission unit (31, 41) being configured to coordinate the transmission of data between the control unit (1) and the sensor (2) or actuator via the respective one of the two transmission links (3, 4) using different transmission parameters, and the transmission parameters are a radio frequency and/or a modulation scheme and/or a communication protocol for the data to be transmitted,
**characterised in that**
the data is transmitted between the control unit (1) and the sensor (2) or actuator via the two transmission links (3, 4) simultaneously.

2. Device as claimed in claim 1, **characterised in that** the transmission links (3, 4) are provided in the form of radio links (35, 45).

3. Device as claimed in one of the preceding claims, **characterised in that** a transmission unit is also assigned to the sensor (2) or actuator and the respective transmission unit is connected to the sensor (2) or actuator by means of a wired connection (39, 49).

4. Device as claimed in claim 3, **characterised in that** a connection unit is also assigned to the sensor (2) or actuator, the connection unit being connected to the respective transmission unit, and the transmission unit is configured to coordinate the transmission of data between the sensor (2) or actuator and the control unit (1) via the respective one of the two transmission links (3, 4) using different transmission parameters.

5. Device as claimed in one of the preceding claims, **characterised in that** the radio frequencies and/or the communication protocols for the data to be transmitted are different.

6. Device as claimed in one of the preceding claims, **characterised in that** the modulation schemes for the data to be transmitted are different.

7. Device as claimed in one of the preceding claims, **characterised in that** the transmission units (31, 41) assigned to the control unit (1) and the transmission units assigned to the sensor (2) or actuator respectively have a transceiver (33, 43; 37, 47) and antennas (34, 44; 36, 46) tuned to one another.

8. Device as claimed in claim 7 wherein the transceivers (33, 43; 37, 47) are configured to prepare the data to be transmitted at a high frequency and emit it via the antennas (34, 44).

9. Device as claimed in one of the preceding claims, **characterised in that** the control unit (1), the connection unit (5) and the transmission units (31, 41) are of a modular design.

10. Working vehicle having a device as claimed in one of the preceding claims.

11. Working vehicle as claimed in claim 10 which is a crane.

## Revendications

1. Dispositif, présentant un appareil de commande (1) ayant au moins un capteur (2) ou actionneur relié à l'appareil de commande (1), conçu pour transmettre des données entre l'appareil de commande (1) et le capteur (2) ou l'actionneur, dans lequel l'appareil de commande (1) est relié au capteur (2) ou à l'actionneur par l'intermédiaire d'au moins deux voies de transmission (3, 4) sans fil séparées l'une de l'autre, dans lequel la transmission de données entre l'appareil de commande (1) et le capteur (2) ou l'actionneur par l'intermédiaire des deux voies de transmission (3, 4) a lieu avec différents paramètres de transmission, dans lequel l'appareil de commande (1) présente une unité de connexion (5) ou est relié à une unité de connexion (5) par l'intermédiaire d'une connexion filaire (6, 7), dans lequel l'unité de connexion (5) permettant de coordonner la transmission de données entre l'appareil de commande (1) et le capteur (2) ou l'actionneur par l'intermédiaire des deux voies de transmission (3, 4) est conçue avec des paramètres de transmission différents, et en outre dans lequel l'unité de connexion (5) est reliée à une unité de transmission (31, 41) par l'intermédiaire d'une connexion filaire (51, 52) respective, dans lequel l'unité de transmission (31, 41) permettant de coordonner la transmission de données entre l'appareil de commande (1) et le capteur (2) ou l'actionneur par l'intermédiaire des deux voies de transmission (3, 4) respectives est conçue avec des paramètres de transmission différents, dans lequel les paramètres de transmission sont une radiofréquence et/ou un schéma de modulation et/ou un protocole de communication pour les données à transmettre,
**caractérisé en ce que**,
la transmission des données entre l'appareil de commande (1) et le capteur (2) ou l'actionneur a lieu simultanément par l'intermédiaire des deux voies de transmission (3, 4).

2. Dispositif selon la revendication 1, **caractérisé en ce que** les voies de transmission (3, 4) sont réalisées sous forme de voies radio (35, 45).

3. Dispositif selon l'une des revendications précédentes, **caractérisé en ce que** le capteur (2) ou l'actionneur est également associé à une unité de transmission, dans lequel l'unité de transmission respective est reliée au capteur (2) ou à l'actionneur par l'intermédiaire une connexion filaire (39, 49).

4. Dispositif selon la revendication 3, **caractérisé en ce que** le capteur (2) ou l'actionneur est également associé à une unité de connexion, dans lequel l'unité de connexion est connectée à l'unité de transmission respective, dans lequel l'unité de transmission permettant de coordonner la transmission de données entre le capteur (2) ou l'actionneur et l'appareil de commande (1) par l'intermédiaire des deux voies de transmission (3, 4) respectives est conçue avec des paramètres de transmission différents.

5. Dispositif selon l'une des revendications précédentes, **caractérisé en ce que** les radiofréquences et/ou les protocoles de communication pour les données à transmettre sont différents.

6. Dispositif selon l'une des revendications précédentes, **caractérisé en ce que** les schémas de modulation pour les données à transmettre sont différents.

7. Dispositif selon l'une des revendications précédentes, **caractérisé en ce que** les unités de transmission (31, 41) associées à l'appareil de commande (1) et les unités de transmission associées au capteur (2) ou à l'actionneur présentent chacune un émetteur-récepteur (33, 43 ; 37, 47) ainsi que des antennes (34, 44 ; 36, 46) coordonnées mutuellement.

8. Dispositif selon la revendication 7, dans lequel les émetteurs-récepteurs (33, 43, 37, 47) sont agencés pour traiter les données à transmettre à haute fréquence et les émettre par l'intermédiaire des antennes (34, 44).

9. Dispositif selon l'une des revendications précédentes, **caractérisé en ce que** l'appareil de commande (1), l'unité de connexion (5) et les unités de transmission (31, 41) sont construites de manière modulaire.

10. Véhicule de travail avec un dispositif selon l'une des revendications précédentes.

11. Véhicule de travail selon la revendication 10, qui est une grue.
